# EUROPÄISCHE PATENTSCHRIFT

(11) **EP 0 568 800 B1**
(45) Veröffentlichungstag und Bekanntmachung des Hinweises auf die Patenterteilung: **21.01.1998**
(21) Anmeldenummer: 93104621.3
(22) Anmeldetag: 20.03.1993
(51) Int. Cl.: G01R 31/36, A61C 19/00, H02J 7/10

(54) **Wiederaufladbares Lichthärtegerät**
Rechargeable light hardening device
Dispositif rechargeable pour le durcissement par la lumière

(30) Priorität: 03.04.1992 DE 4211230
(43) Veröffentlichungstag der Anmeldung: 10.11.1993
(73) Patentinhaber: IVOCLAR AG, FL-9494 Schaan (LI)
(72) Erfinder: Mann, Roland, Dipl.-Ing., FL-9490 Vaduz (LI)
(74) Vertreter: Patentanwälte Dipl.-Ing. R. Splanemann Dr. B. Reitzner Dipl.-Ing. K. Baronetzky

(56) Entgegenhaltungen:
- EP-A- 0 207 054
- WO-A-86/06614
- DE-C- 3 534 342
- FR-A- 2 632 131
- US-A- 4 644 245

## Beschreibung

Die Erfindung betrifft ein wiederaufladbares Lichthärtgerät, insbesondere für das Aushärten von Dentalwerkstoffen wie Zahnfüllmaterialien, gemäß dem Oberbegriff von Anspruch 1.

Derartige Bestrahlungsgeräte zum Aushärten von durch Strahlung härtbaren Massen sind beispielsweis aus der EP-A2-166 364 bekannt. Sie enthalten in der Regel eine Lichtquelle, einen Lichtleiter und Kopplungsmittel zwischen Lichtleiter und Lichtquelle. Hier und im folgenden wird unter Licht eine elektromagnetische Strahlung geeigneter Frequenz verstanden, wobei es sich versteht, daß grundsätzlich alle geeigneten Strahlungsarten zur Anwendung gelangen können.

Bei dem bekannten Strahlungsgerät ist die Lichtquelle eine Leuchtstoffröhre, die über ein Kabel, einen Netztransformator, eine Batterie, oder einen Akkumulator gespeist werden kann. Beim Bestücken mit einem Akkumulator kann das Handgerät mit einer Steckverbindung zum Aufladen versehen sein.

Es hat sich jedoch gezeigt, daß lichthärtbare Massen in unzureichendem Maße aushärten, wenn die Lichthärtung nicht in der vorgeschriebenen Weise durchgeführt wird. Daher muß bei einem derartigen Gerät der Akkumulator nach Möglichkeit stets vollgeladen aufbewahrt werden, um stets die volle Lichtstärke zur Verfügung zu stellen. Dies führt bekanntlich aufgrund des sogenannten "Memory-Effekts" zur Degradation der Kapazität des Akkumulators, die im fortgeschrittenen Stadium nur bis zu einem gewissen Grade reversibel ist. Eine Umkehrung des Memory-Effekts ist zudem aufwendig und der Erfolg ungewiß, wenn der Memory-Effekt weit fortgeschritten ist.

Bei akkubetriebenen Dentalbehandlungseinrichtungen wird aufgrund dieser Schwierigkeiten und der kritischen Betriebsparameter ein rascher Austausch des verwendeten Akkumulators fällig, was aus verschiedenen Gründen nachteilig ist.

Ferner ist ein einfaches Lichthärtgerät bekannt geworden, in dem ebenfalls ein Akkumulator vorgesehen ist. Bei diesem Gerät wird über einen mechanischen Zähler die Anzahl der Einschaltungen des Gerätes registriert. Die Einschaltung ist hierbei zum Beispiel auf 20s fest vorgegeben, und nach einer vorgegebener Anzahl von Einschaltungen wird angenommen, daß die Akkumulatoren zu sehr erschöpft sind, um eine weitere Zeitspanne zur Polymerisation zu erlauben. Nach diesem Zeitpunkt muß eine vollständige Aufladung der Akkumulatoren vorgenommen werden. Erst dann ist das Gerät wieder betriebsbereit.

Dieses Lichthärtgerät besitzt gravierende Nachteile. Einmal ist die Aufladezeit der Akkumulatoren zu groß. Zum anderen ist die Überwachung der Lichtintensität des Geräts mit Hilfe des Zählens von Einschaltzyklen und der Sperrung des Geräts nach einem bestimmten Anzahl von Einschaltungen völlig unbefriedigend. Das Lichthärtgerät zählt lediglich die Einschaltungen und damit eine definierte Zeit, ohne die tatsächliche Kapazität des Akkumulators zu berücksichtigen. Ein weiterer Nachteil besteht darin, daß das Gerät jedes Mal voll aufgeladen werden muß, um diese Art der Steuerung überhaupt effektiv werden zu lassen. Ferner muß jedes Mal eine bestimmte Brenndauer eingehalten werden, und der "Memory Effekt" wird nicht berücksichtigt.

Diese Gesichtspunkte stellen gravierende Nachteile dar, da der Zahnarzt sich auf die Lichtintensität der Lampe verlassen muß, die benötigte Intensität aber nicht mehr zu Verfügung steht, so daß die Zahnfüllung nicht oder nicht vollständig aushärtet und damit fehlerhaft wird. Bei Verwendung eines derartigen Geräts sind somit Regressansprüche nicht ausgeschlossen.

Ferner sind aus der US-PS 3 109 238 und der US-PS 3 509 629 akkubetriebenen Dentalbehandlungseinrichtungen bekannt, die eine Wiederaufladung der Akkumulatoren über ein übliches Ladegerät erlauben. Alternativ ist es vorgesehen, Einwegbatterien zu verwenden. Einwegbatterien erlauben zwar eine schnelle Wiederinbetriebnahme der Dentalbehandlungseinrichtung, werden jedoch aus Umweltgründen häufig als bedenklich angesehen und sind im Verbrauch relativ teuer. Zudem fordert das Ersetzen der Batterien ein Öffnen des Handgeräts. Dies ist im medizinischen Bereich häufig unerwünscht.

Ferner ist aus der WO-A-86/06614 ein gattungsgemäßer Zahnhärtgerät mit einer Ladezustandsüberwachungsschaltung bekannt, das eine Spannungsüberwachung der dortigen Batterien vornimmt. Es können sowohl wiederaufladbare als auch Einwegbatterien verwendet werden. Um eine Polymerisation bei zu geringer Spannung zu verhindern, soll das Einschalten der Lichtquelle in Abhängigkeit von der Klemmenspannung unterbunden werden. Diese Lösung ergibt jedoch ein unbefriedigendes Betriebsverhalten des Lichthärtgeräts, so daß sich das Gerät auf dem Markt nicht plazieren konnte.

Daher liegt die Erfindung die Aufgabe zugrunde, ein wiederaufladbares Lichthärtgerät gemäß dem Oberbegriff von Anspruch 1 zu schaffen, das eine verbesserte Verfügbarkeit erlaubt, ohne daß die Akkumulatorspannung für den Betrieb des Lichthärtgeräts kritische Werte annimmt.

Diese Aufgabe wird erfindungsgemäß durch Anspruch 1 gelöst. Vorteilhafte Weiterbildungen ergeben sich aus der Unteransprüchen.

Mit der Erfindung läßt sich das Lichthärtgerät abschalten, wenn die Kapazität der Akkus unter ein bestimmtes festgesetztes Minimum sinkt. Hierzu wird erfindungsgemäß eine Steuerung durch eine direkte Kapazitätsmessung der Akkus vorgenommen.

Mit der erfindungsgemäßen Lösung läßt sich auch bei kritischen Dentalbetriebsparametern, die eine mit Gewißheit einzuhaltende minimale Betriebspannung verlangen, eine ganz erheblich gesteigerte Nutzungsdauer der Akkumulatoren erreichen, die zudem den zahntechnischen Organisationsabläufen erheblich entgegenkommt.

Da kein Reserve-Akkumulatorensatz bereitgehalten werden muß, entfällt auch die Notwendigkeit, das Handgerät zu öffnen, um den Reservesatz einzusetzen. Auch im übrigen kann - beispielsweise durch glatte Ausbildung der Oberfläche des Ladegeräts - die erfindungsgemäße Dentalbehandlungseinrichtung bzw. das erfindungsgemäße Lichthärtgerät leicht sterilisierbar gehalten sein.

Aufgrund der zur Verfügung gestellten und durch die elektrische und/oder mechanische Kopplung von Ladegerät und Handgerät sofort einschaltbare Schnelladebetriebsart steht das Lichthärtgerät oder sonstiges im Dentalbereich einsetzbares Dental-Handgerät, wie beispielsweise ein Handbohrer, rasch für die Wiederverwendung zur Verfügung, auch wenn die Entladung bereits stark fortgeschritten ist.

Besonders günstig ist es, daß eine Umschaltung auf die Erhaltungsladung im Ladegerät erfolgt. Diese bevorzugt automatische Umschaltung ermöglicht es, den Schnelladebetrieb definiert zu beenden, so daß stets vollständig aufgeladene Akkumulatoren zur Verfügung stehen, ein Überladen vermieden wird und ein Wiederaufladen unabhängig davon geschehen kann, welchen Ladezustand der in dem Handgerät befindliche Akkusatz bei Beginn des Schnelladebetriebs aufwies. Auch kann das Handgerät beliebig lange in der Ladeschaltung belassen werden, so daß die Handhabung erheblich vereinfacht ist, und die Verfügbarkeit stark erhöht ist.

Der Griff des Handgeräts Kann in eine schachtförmige Ladegerät-Ausnehmung passen, jedoch länger als diese sein. Im Betrieb kann das Handgerät dann in der Ausnehmung gleichsam abgestellt werden, wobei der erforderliche Kontaktdruck durch das Eigengewicht des Handgeräts leicht erreicht wird.

Eine weitere Erhöhung der Verfügbarkeit läßt sich durch die Realisierung von zwei Ladegerät-Ausnehmungen für die Aufnahme von je einem Handgerät gewährleisten. Hier können dann zwei Handgeräte gewünschtenfalls nacheinander aufgeladen werden, wobei es günstig ist, wenn der Ladezyklus für das als zweites eingesetzte Handgerät dann eingeleitet wird, wenn der Umschalter für das erste Ladegerät auf Erhaltungsladung umschaltet.

Besonders günstig ist es, wenn durch einen Ladezustandsfühler die in unteren Ladezuständen hohen Ladeströme stufenweise vor der Umschaltung auf die Erhaltungsladung vermindert werden. Es ist sogar möglich, Entladezeiten zu erzielen, die länger als die Ladezeiten sind, wenn nicht ein vollständig geladener oder nahezu vollständig geladener Akkusatz betrieben wird.

Erfindungsgemäß besonders günstig ist die Anordnung eines Kapazitätsmeßschaltkreises im Handgerät. Durch die kontinuierliche Kapazitätsmessung kann ebenfalls das Ausmaß der Verfügbarkeit erheblich gesteigert werden. Zugleich kann sichergestellt sein, daß die kritischen Grenzparameter beispielsweise für die minimale Beleuchtungsstärke für eine den Anforderungen genügende Fotopolymerisation unter allen Betriebszuständen sichergestellt ist, also auch dann, wenn die zur Verfügung stehende Restbetriebsdauer die erforderliche Brenndauer nur um weniges übersteigt.

Durch den erfindungsgemäßen Kapazitätsmeßschaltkreis ist es möglich, auch der Alterung der Akkumulatoren Rechnung zu tragen. Hierzu muß lediglich die durch den Betrieb abgegebene Strommenge zu der verbleibenden Betriebsspannung in Beziehung gesetzt werden, so daß eine erhebliche Verminderung der Kapazität leicht feststellbar ist.

In diesem Zusammenhang ist es besonders günstig, wenn ein möglicherweise entstehender Memory-Effekt frühzeitig erkannt und mit dem erfindungsgemäßen Ladegerät in der Weise bekämpft werden kann, daß vor der Einschaltung der Schnelladebetriebsart und somit auch vor Umschaltung auf die Erhaltungsladung eine Vollentladung durchgeführt wird. Gemäß einer Ausgestaltung der Erfindung ist es vorgesehen, den Alterungseffekt optisch anzuzeigen, während gemäß einer weiteren Ausgestaltung das Handgerät dem Ladegerät unmittelbar die Notwendigkeit einer Auffrisch-Betriebsart über die elektrischen Kontakte signalisiert.

Zur Feststellung des Memory-Effektes läßt sich besonders vorteilhaft folgende Maßnahme einsetzen:

Über eine aus der Betriebsspannung abgeleitete Grenzspannung wird festgestellt, wann eine der Betriebspannung proportionale Spannung von einem ersten Schwellenwert bei eingeschaltetem Gerät auf einen zweiten Stellenwert abfällt. Aufgrund der Tatsache, daß der Widerstand vorbekannt und im wesentlichen als konstant anzunehmen ist, steht die somit abgegebene Strommenge fest. Wenn beispielsweise die erste Schwellenspannung etwa knapp unterhalb der Mitte des realisierten Betriebsspannungsbereichs, und die zweite Schwellenspannung etwas unterhalb dieser Spannung festgelegt wird, lassen sich aus dem Abfall der der Betriebsspannung proportionalen Spannung von der ersten zu der zweiten Schwellenspannung Rückschlüsse über die noch verbleibende Kapazitätsreserve ziehen. Besonders günstig in diesem Zusammenhang ist es, wenn ein Vorwiderstand für den Gebläsemotor verwirklicht ist, wobei die der Betriebsspannung proportionale Spannung dann über dem Gebläsemotor abgegriffen werden kann. Es versteht sich, daß für eine Messung des reinen Innenwiderstands des Akkusatzes auch die Klemmenspannung des Akkusatzes verwendet werden kann.

Gemäß einer vorteilhaften Ausgestaltung der Erfindung ist es vorgesehen, für den Kapazitätsmeßschaltkreis eine Steuerschaltung vorzusehen, die die Betriebsspannung der Lampe langsam aufbaut. Hierdurch wird verhindert, daß aufgrund des geringen Kaltwiderstands der Lampe ein die Lebensdauer dieser verkürzender Einschaltstromstoß abgegeben wird.

Gemäß einer weiteren Abwandlung der Erfindung ist es vorgesehen, die Betriebsspannung und den Entladestrom des Handgeräts während der Brenndauer der Lampe permanent zu überwachen. Beispielsweise ist es möglich, aus der Stärke des Spannungsabfalls und/oder der Stromwerte des Akkusatzes auf die Kapazität des Akkusatzes und/oder die Restbetriebsdauer zu schließen.

Besonders günstig ist es ferner, wenn eine Kapazitätsanzeige vorgesehen ist, deren Eingang mit dem Kapazitätsmeßschaltkreis verbunden ist. Diese Anzeige kann so ausgelegt sein, daß sie stets die zur Verfügung stehenden Restbetriebsdauer anzeigt. Hierbei ist es besonders günstig, wenn die bestehende Kapazität des Akkusatzes berechnet wird, so daß die nach längerer Betriebsdauer einsetzende Alterung in die Anzeige einbezogen werden kann.

Das wiederaufladbare Lichthärtgerät zum Aushärten von Dentalwerkstoffen, vorzugsweise zum Aushärten von Zahnfüllungen besteht aus einem Gehäuse aus Kunststoff oder Metall, welches vorzugsweise eine abgewinkelte, pistolenförmige Form aufweist. Das Gehäuse wird vorzugsweise aus einem Kunststoff im Spritzgußverfahren hergestellt. Es besteht aus einem im wesentlichen waagrechten Oberteil mit einem vorzugsweise zwischen 25 und 60° abgewinkelten Haltegriff. Im Gehäuse untergebracht ist ein Lichtleiter, der aus dem Gehäuse herausragt und an bzw. in diesem vorzugsweise lösbar befestigt ist. Dazu dient eine Aufnahme, die den Lichtleiter in einer genau definierten Stellung hält. Ferner ist im Gehäuse eine Lichtquelle, vorzugsweise eine Halogenlampe mit Reflektor untergebracht. Die Ausrichtung des Lichtes auf den Lichtleiter kann durch konstruktive Mittel erfolgen, indem die Reflektorhalogenlampe derart befestigt wird, daß die Bündelung des Lichtes genau am Anfang des Lichtleiters erfolgt. Es können auch optische Kopplungsmittel wie Linsen und dgl. verwendet werden.

Die Innenwandung des Reflektors kann mit einem Filter beschichtet sein, das z.B. Licht im UV-Bereich und/oder im Ultrarotbereich ausfiltert und nur sichtbares Licht reflektiert. Zusätzlich können zwischen Lichtquelle und Lichtleiter ein oder mehrere Filter angeordnet sein, wenn der Reflektor nicht mit einem Filter beschichtet ist. Das Zwischenfilter kann auch zusätzlich angeordnet sein. Zur Kühlung der Lampe ist - vorzugsweise ebenfalls im Oberteil des Gehäuses - ein Kühlventilator vorgesehen.

Im Gehäuse ist weiter ein Tastschalter zum Ein- und Ausschalten der Lichtquelle angeordnet. Vorzugsweise ist dieser ergonomisch derart im Griffteil des Gehäuses befestigt, daß er mit dem Finger leicht bedient werden kann. Ein Kippschalter kann ebenfalls verwendet werden.

Im Gehäuse, vorzugsweise im Handstück, ist weiterhin ein elektronisches Bauteil zur Messung und Anzeige der Kapazität des Akkumulators untergebracht. Bei der Kapazitätsanzeige handelt es sich vorzugsweise um eine LCD-Anzeige, die ergonomisch so plaziert wird, daß sie leicht ablesbar ist. Vorzugsweise sitzt die Anzeige im Oberteil des Gehäuses. Das elektronische Bauteil ist in Form einer miniaturisierten Komponente im Pistolengriff eingesetzt. Bei einer speziellen Ausführungsform der Erfindung wird über eine Strom- oder Spannungsmessung die Kapazität gemessen und auf einer Anzeige in 0,5 Minutenschritten sichtbar gemacht. Sie gibt in vorbestimmten Zeitintervallen die noch mögliche Arbeitszeit des Geräts an. Das elektronische Bauteil ist so konzipiert, daß es sich dynamisch an eine allfällige Alterung des Akkus anpaßt und jederzeit die noch verfügbare Polymerisationszeit des Gerätes mißt und anzeigt. So ist bei einer Teilladung des Akkus die Kapazität und damit umgesetzt die Polymerisationszeit ersichtlich. Das Gleiche gilt für einen Memory-Effekt, der zwar eine Volladung des Akkus nicht zuläßt, den Zahnarzt jedoch über die Anzeige unterrichtet, welche Polymerisationszeit noch zur Verfügung steht.

Ein weiteres elektronisches zweites Bauteil als miniaturisierte Komponente ist im Gehäuse des Handstücks untergebracht und dient zur Steuerung der Lampe. Mit dem Einschalten über den Tastschalter wird die Lampe aktiviert. Vorzugsweise bewirkt ein Zeitglied des zweiten elektronischen Bauteils eine vorbestimmte Einschaltzeit, z.B. 20 Sekunden des Lichthärtgerätes. Ferner wird durch den Druck auf den Tastschalter ein Kühlventilator aktiviert. Denkbar wäre hier auch eine zeitversetzte Einschaltung des Ventilators.

Nach Ablauf der vorbestimmten Einschaltzeit von 20 Sekunden wird akustisch ein Zeichen gegeben, z.B. ein Piepston, mit dem dem Zahnarzt angezeigt wird, daß das Gerät abgeschaltet werden soll (z.B. bei der Aushärtung von dünnen Schichten wie Fissurenversieglungsmassen.) Ist ein längere Polymerisationszeit vorgeschrieben wie z.B. 40 Sekunden für Zahnfüllungen, so wird dies durch einen zweimaligen Piepston angezeigt. Die Zeitintervalle werden zählend bis zu einer Minute signalisiert:

| | |
|---|---|
| Nach 20 sec. | 1 Signal |
| Nach 40 sec. | 2 Signale |
| Nach 60 sec. | 3 Signale, |

wobei eine Wiederholung nach jeder abgelaufenen Minute vorgesehen ist. Nach Ertönen eines solchen akustischen Signals schaltet der Zahnarzt durch nochmaliges Drücken auf den Tastschalter das Gerät aus. Das Gerät kann jedoch auch zwischen den Zeitintervallen durch Druck auf den Taster jederzeit ausgeschaltet werden. Da die tatsächliche Kapazität gemessen wird, hat dies auf die Anzeige keinen Einfluß. Je nach Temperatur an der Lampe schaltet das zweite elektronische Bauteil den Ventilator ab oder läßt ihn noch nachlaufen, bis eine vertretbare, im voraus festgelegte Temperatur erreicht ist. Die Messung der Temperatur erfolgt über einen Temperatursensor.

Das zweite elektronische Bauteil sorgt ferner dafür, daß bei einer vorbestimmten Grenzspannung, z.B. bei 90% der vorgeschriebenen Spannung, die Lichtquelle abgeschaltet wird. Es ist also nicht möglich, durch zu schwache Lichtintensität der Lampe fehlerhafte Füllungen zu erhalten, wie dies bei den Geräten nach dem Stand der Technik der Fall ist.

Ggf. sorgt das zweite elektronische Bauteil dafür, daß beim Einschalten der Lampe die Spannung nicht ruckartig auf die Lampe gegeben wird, sondern daß sie innerhalb von z.B. ein bis zwei Sekunden sanft und langsam aufgebaut wird. Die Lampe wird dadurch geschont und die Lebensdauer verlängert.

Es versteht sich von selbst, daß das erste elektronische Bauteil für die Kapazitätsmessung und Anzeige mit dem zweiten elektronischen Bauteil zur Steuerung der Lampe derart zusammengeschaltet werden muß, daß die Lichtquelle zwangsweise ausgeschaltet wird, wenn die Kapazität nicht mehr für eine Polymerisationsdauer von 40 Sekunden oder 20 Sekunden ausreicht, wobei gleichzeitig die Anzeige entsprechend anzeigen muß. Wahlweise kann eine Warnung über den Piepston erfolgen, der den Zahnarzt darauf aufmerksam macht, daß ein Ladevorgang notwendig ist.

Im Gehäuse - vorzugsweise im Handstück - sind neben einem oder mehreren Akkumulatoren entsprechende Ladekontakte vorgesehen. Diese Ladekontakte werden mit einem Ladegerät gekoppelt, und das Lichthärtgerät wird mit einer sofort einschaltbaren Schnelladebetriebsart aufgeladen. Die Schnelladung des Lichthärtgerätes ist wesentlich. Sie sollte innerhalb von 10 Minuten abgeschlossen sein, damit das Lichthärtgerät ohne längere Ausfallzeiten zur Verfügung steht.

Besonders günstig ist es, daß eine Umschaltung auf die Erhaltungsladung im Ladegerät erfolgt. Diese bevorzugt automatische Umschaltung ermöglicht es, den Schnelladebetrieb definiert zu beenden, so daß stets vollständig aufgeladenen Akkumulatoren zur Verfügung stehen, ein Überladen vermieden wird und ein Wiederaufladen unabhängig davon geschehen kann, welchen Ladezustand der in dem Handgerät befindliche Akkusatz bei Beginn des Schnelladebetriebs aufwies. Auch kann das Handgerät beliebig lange in der Ladeschaltung belassen werden, so daß die Handhabung erheblich vereinfacht ist, und die Verfügbarkeit stark erhöht wird.

Besonders günstig ist es, wenn durch einen Ladezustandsfühler die in unteren Ladezuständen hohen Ladeströme stufenweise vor der Umschaltung auf die Erhaltungsladung vermindert werden. Es ist sogar möglich, Entladezeiten zu erzielen, die länger als die Ladezeiten sind, wenn nicht ein vollständig geladener oder nahezu vollständig geladener Akkusatz betrieben wird.

Vorzugsweise ist das Ladegerät so ausgelegt, daß beim Laden des Akkus keine Erwärmung auftritt. Die bei Dauerentladen im Betrieb heißgewordenen Akkus können daher sofort wieder aufgeladen werden.

Weitere Einzelheiten, Merkmale und Vorteile ergeben sich aus der nachfolgenden Beschreibung eines Ausführungsbespiels anhand der Zeichnung.

Es zeigen:

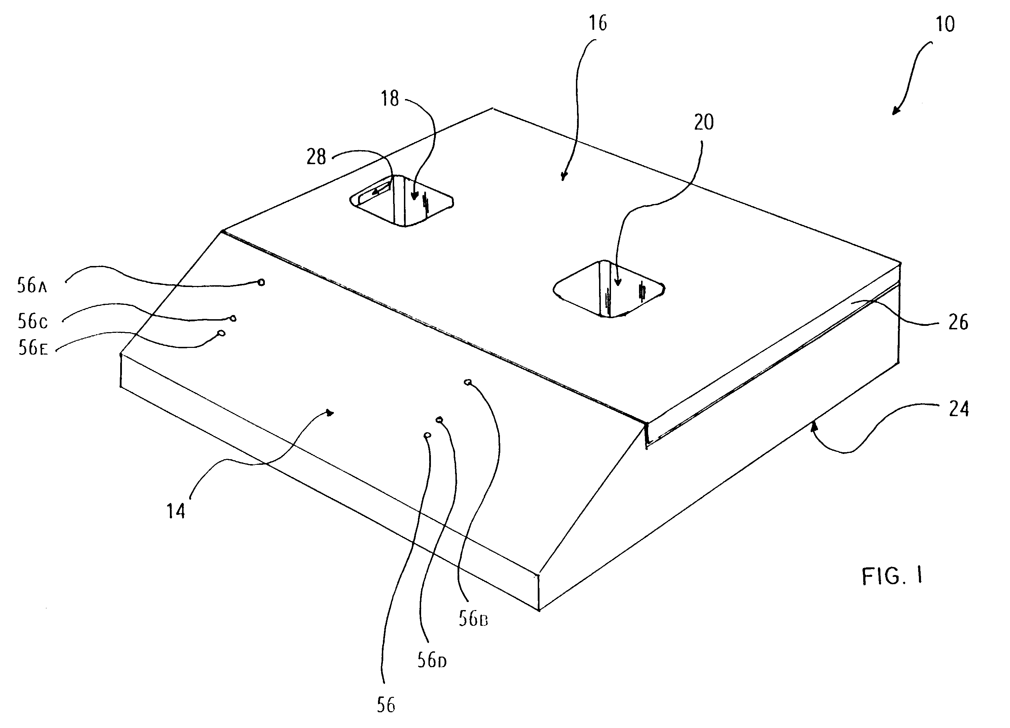

- Fig. 1: eine schematische Ansicht eines Ladegeräts in perspektivischer Darstellung;
- Fig. 2: ein Schnitt durch ein Lichthärtgerät in einer Ausführungsform der Erfindung, das zugleich ein Handgerät bildet; und
- Fig. 3: ein schematisiertes Schaltbild des Handgeräts gemäß Fig. 2.

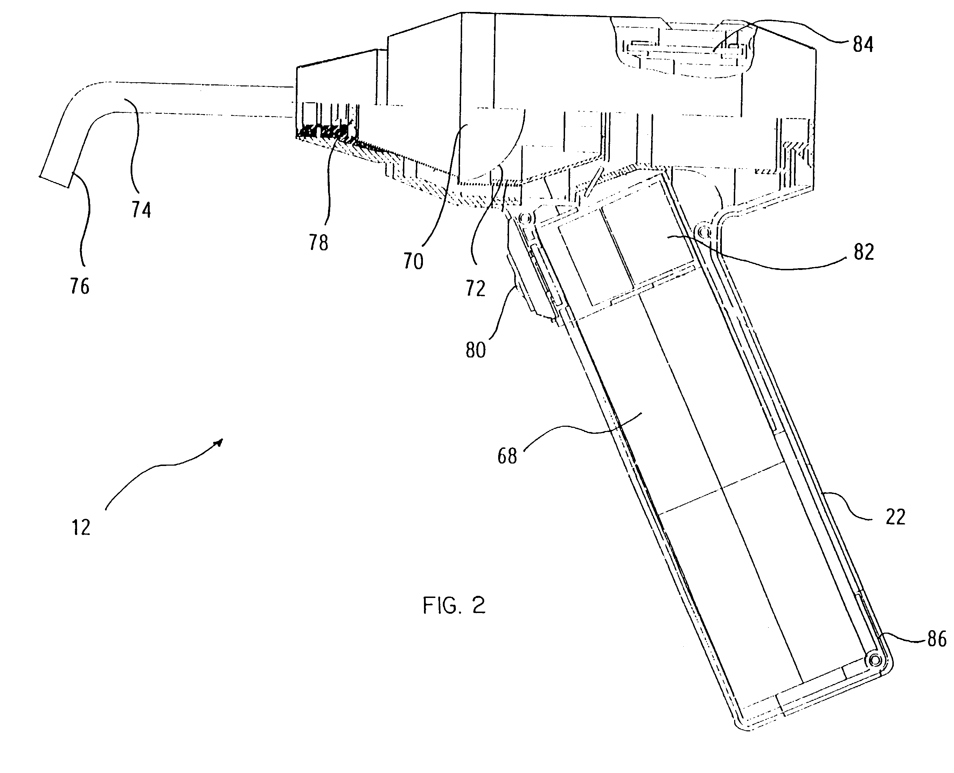

Das Ladegerät 10 weist einen pultförmigen Grundaufbau mit einer vorderen Schrägfläche 14 und einer sich nach hinten an diese anschließenden glatten Oberfläche 16 auf. In der Oberfläche 16 sind zwei Ladegerät-Ausnehmungen 18 und 20 vorgesehen, die je einen schachtförmigen, im wesentlichen identischen Aufbau aufweisen und für die Aufnahme eines in Fig. 2 dargestellten Griffs 22 des Handgeräts 12 geeignet ausgebildet sind. In Anpassung an die Form des Griffs 22 ist der Querschnitt jeder Ausnehmung 18 und 20 quadratisch mit ausgerundeten Ecken. Die Ausnehmungen 18 und 20 sind ferner mit nicht dargestellten elektrischen Anschlüssen versehen, über welche die Kontaktgabe zu dem Handgerät 12 erfolgt.

Das Ladegerät 10 weist ferner eine Basisplatte 24 auf, die aus Aluminium besteht und Kühlzwecken dient. Die Oberfläche 16 und die Schrägfläche 14 weisen keine Kühlschlitze oder dergleichen auf, so daß ein Abwischen des Ladegeräts 10 mit einem Desinfektionsmittel gefahrlos möglich ist.

Zudem ist ein die Oberfläche 16 tragender Deckel 26 durch die Betätigung von Auslösern, von denen ein Auslöser 28 in der Ausnehmung 18 ersichtlich ist, abnehmbar, so daß auch das Innere des Geräts zugänglich ist und gegebenenfalls gereinigt werden kann.

Das in Fig. 2 dargestellte Handgerät 12 ist in dem dargestellten Ausführungsbeispiel ein Lichthärtgerät und weist ein Gehäuse 66 auf, das einen Akkusatz 68 und eine Lampe 70 aufnimmt. Die Lampe 70 ist in an sich bekannter Weise im Brennpunkt eines Reflektors 72 angeordnet, der die abgegebene Lichtstrahlung so bündelt, daß sie in dem Einlaßbereich eines Lichtleiters 74 fällt, der in ebenfalls an sich bekannter Weise durch einen Führungsrohr 76 zur Lichtabgabe an der gewünschten Stelle geführt ist.

Der Reflektor 72, der Lichtleiter 74 und ein Filter 78 bilden Lichtleitelemente für die von der Lampe 70 abgegebene Lichtstrahlung.

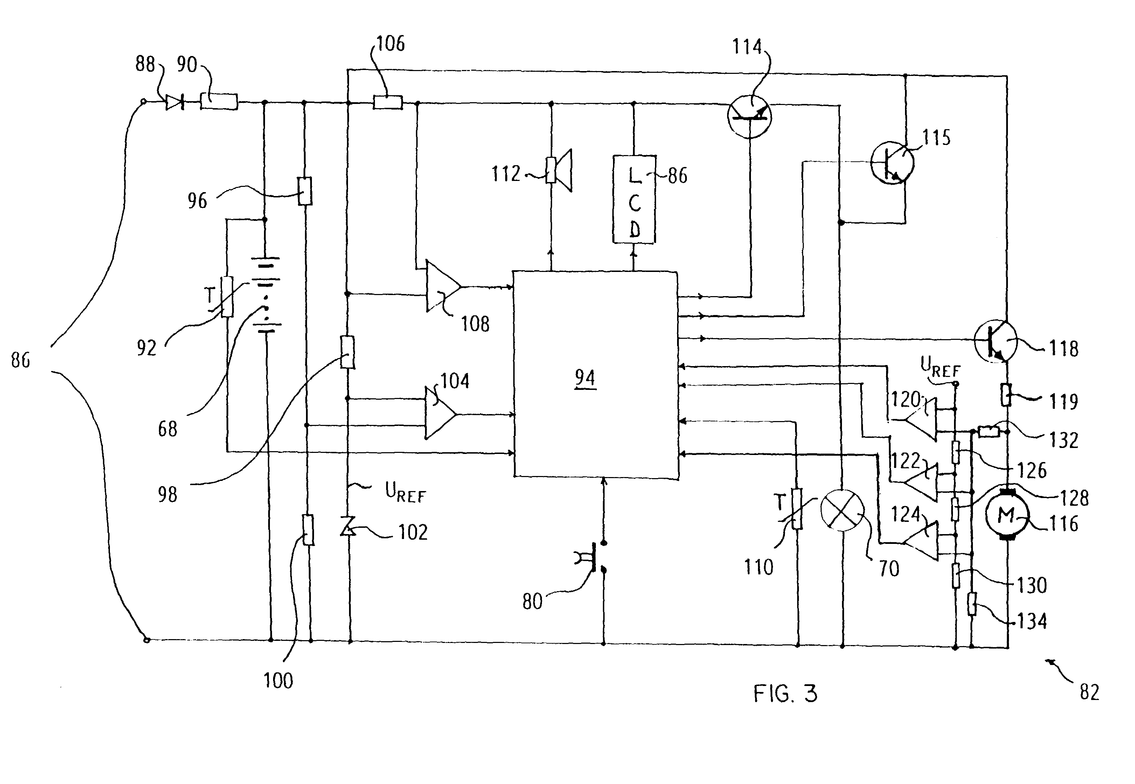

Die Lampe 70 ist über einen Tastschalter 80 und einen Kapazitätsmeßschaltkreis 82 mit dem Akkusatz 68 verbunden. Der erfindungsgemäße Kapazitätsmeßschaltkreis 82 ist weiter unten anhand von Fig. 3 näher erläutert.

Er ist ferner mit einer Kapazitäts-Anzeige 84 verbunden, die die je verbleibende Restbetriebsdauer anzeigt, bevor ein erneutes Aufladen des Akkusatzes 68 erforderlich ist.

Der Griff 22 weist ferner elektrische Anschlüsse 86 auf, die für die Kontaktgabe mit dem Ladegerät 10 geeignet ausgebildet sind, wenn sich das Handgerät 12 mit dem Griff 22 in einer der Ladegerät-Ausnehmungen 18 oder 20 befindet.

Die Gewichtsverteilung der Akkumulatoren des Akkusatzes ist so gewählt, daß sich der Schwerpunkt relativ weit unten in dem Griff 22 befindet. Dies ist für die Handhabung günstig, ebenso wie die an sich bekannte Pistolenform des Handgeräts 12.

In Fig. 3 ist das Schaltbild des Kapazitätsmeßschaltkreises zusammen mit weiteren elektrischen Bauelementen, die in dem Handgerät 12 enthalten sind, dargestellt. Die elektrischen Anschlüsse 86 sind über eine Schutzdiode 88, die als Verpolungsschutz dient, und einen Schutzwiderstand 90 mit dem Akkusatz 68 verbunden. Der Akkusatz 68 weist beispielsweise fünf zueinander in Serie geschaltete Akkumulatoren auf, was bei der Verwendung von Nickel-Cadmium-Akkumulatoren eine Betriebsspannung von 6,0V ergibt. Es versteht sich, daß anstelle dessen eine beliebig andere Akkumulatorenart, -anzahl und -beschaltung eingesetzt werden kann.

In räumlicher Nachbarschaft zu dem Akkusatz 68 ist ein Temperatursensor 92 angeordnet, der im Beispielsfall als PTC-Widerstand in einer - nicht dargestellten - Brückenschaltung ausgebildet ist und die Temperatur des Akkusatzes 68 erfaßt. Der Temperatursensor 92 ist an eine Steuerschaltung 94 angeschlossen, die bei Erreichen einer kritischen Grenztemperatur das Handgerät 12 abschaltet, bis die Temperatur wieder in ausreichendem Maße unter den zulässigen Wert gesunken ist.

Über den Akkusatz 68 ist eine Referenzbrückenschaltung für die Erfassung der Klemmenspannung des Akkusatzes 68 geschaltet. Die Referenzbrückenschaltung besteht aus drei Brückenwiderständen 96, 98 und 100, einer Referenzspannungsquelle 102 und einem Differenz-Verstärker 104 in der Brückendiagonale. Die Referenzspannungsquelle 102 ist hier symbolisch als Zenerdiode dargestellt und gibt eine Referenzspannung U_{ref} ab. Das Ausgangssignal des Differenz-Verstärkers 104 gibt wieder, wann die Klemmenspannung des Akkusatzes 68 unter einen Referenzwert fällt, der durch die Referenzspannung vorgegeben ist, die über die Zenerdiode 102 anliegt, und wird ebenfalls in die Steuerschaltung 94 eingespeist.

Ferner ist die positive Anschlußklemme des Akkusatzes 68 mit einem Anschluß eines Stromfühlwiderstandes 106 verbunden, über den ebenfalls ein Differenzverstärker 108 geschaltet ist, desses Ausgangssignal ebenfalls in die Steuerschaltung 94 eingespeist wird. Der Stromfühlwiderstand wird mit dem Betriebsstrom der Lampe 70 des Lichthärtgeräts durchflossen, so daß der Differenzverstärker 108 den Betriebsstrom der Lampe 70 signalisiert.

Die Steuerschaltung 94 ist ferner mit dem Tastschalter 80 sowie mit einem weiteren Temperatursensor 110 verbunden, der in thermischer Nähe zu der Lampe 70 angeordnet ist. Mit dem Temperatursensor 110 wird die Temperatur der Lampe bzw. der Umgebung der Lampe 70 erfaßt und ein weiter unten erläutertes Gebläse abgeschaltet, wenn diese Temperatur unterhalb eines gewünschten Wertes ist.

Die Steuerschaltung 94 ist ferner mit einem Lautsprecher 112 verbunden, der auch als Piezokristall ausgebildet sein kann und der akustischen Signalisierung des Betriebs dient, sowie mit der Kapazitätsanzeige 84, die als Flüssigkristallanzeige ausgebildet ist.

Ferner steuert die Steuerschaltung 94 die Basis eines Leistungstransistors 114, dessen Kollektor mit dem anderen Anschluß des Stromfühlwiderstandes 106 und dessen Emitter mit der Lampe 70 verbunden ist. Zudem steuert die Steuerschaltung 94 die Basis eines Leistungstransistors 115, dessen Kollektor mit dem einen Anschluß des Stromfühlwiderstandes 106 und dessen Emitter mit der Lampe 70 verbunden ist. Mit dem Leistungstransistor 114 wird somit die Lampe 70 über einen Vorwiderstand eingeschaltet, während mit dem Leistungstransistor 115 die Lampe unmittelbar eingeschaltet wird. Die Leistungstransistoren 114 und 115 sind bevorzugt vom Germanium-Typ, so daß der Spannungsabfall über den Stromfühlwiderstand 106 und den Leistungstransistor 114 zusammen unter 0,4V liegt, was einen entsprechend hohen Wirkungsgrad erlaubt. Gemäß einer anderen Ausgestaltung ist es vorgesehen, die Leistungstransistoren 114 und 115 wie auch einen weiter unten beschriebenen Leistungstransistor 118 durch Kleinrelais zu ersetzen, so daß der Spannungsabfall noch stärker vermindert wird.

Das Gebläse weist ein nicht dargestelltes Flügelrad und einen Motor 116 auf, der über den weiteren Leistungstransistor 118 und einen Vorwiderstand 119 mit der positiven Klemmenspannung des Akkusatzes 68 verbunden ist, wobei die Basis des Leistungstransistors 118 ebenfalls von der Steuerschaltung 94 angesteuert wird.

Die Steuerung des Gebläses erfolgt so, daß bei einer Betätigung des Tastschalters 80, die die Lampe einschaltet, das Gebläse stets eingeschaltet wird, eine erneute Betätigung des Tastschalters 80 jedoch nur die Lampe 70 ausschaltet und das Gebläse erst dann ausgeschaltet wird, wenn Temperatursensor 110 anzeigt, daß dies sinnvoll ist.

Der Verbindungspunkt zwischen dem Vorwiderstand 119 und dem Motor 116 ist ferner mit je einem Eingangsanschluß dreier Differenzverstärker 120, 122, 124 verbunden. Die Referenzspannung U_{ref} ist ferner über einen Spannungsteiler mit drei in Reihe geschalteten Widerständen 126, 128, 130 mit Masse verbunden. Der andere Eingangsanschluß des Differenzverstärkers 120 ist mit der Referenzspannung U_{ref} verbunden. Der Verbindungspunkt zwischen den Widerständen 126 und 128 ist mit dem anderen Eingangsanschluß des Differenzverstärkers 122 verbunden. Der Verbindungspunkt zwischen den Widerständen 128 und 130 ist mit dem anderen Eingangsanschluß der Differenzverstärkers 124 verbunden. Die Ausgänge der Differenzverstärker 120 bis 124 sind je mit der Steuerschaltung 94 verbunden.

Am Verbindungspunkt zwischen den Widerständen 126 und 128 liegt aufgrund der Spannungsteilerwirkung der Widerstände 126 bis 130 über die Referenzspannung U_{ref} eine erste Schwellenspannung an. Entsprechend liegt eine weitere Schwellenspannung an dem Verbindungspunkt der Widerstände 128 und 130 an. Die Referenzspannung wie auch die hieraus abgeleiteten ersten und zweiten Schwellenspannungen sind je unabhängig von der tatsächlich anliegenden Betriebsspannung und liegen tiefer als diese. Da der Verbindungspunkt des Motors 116 mit dem Vorwiderstand 119 nicht direkt, sondern über einen Widerstand 132 mit den je einen Eingangsanschlüssen der Differenzverstärker 120 bis 124 verbunden ist, wobei diese zusätzlich über einen weiteren Widerstand 134 mit Masse verbunden sind, liegt auch dort ein Spannungsteiler vor, der eine der Motorspannung proportionale Spannung abgibt.

Die Beschaltung der Differenzverstärker 120 bis 124 signalisiert somit, wann die Betriebsspannung in belastetem Zustand, d.h., bei eingeschalteter Lampe 70 und eingeschaltetem Gebläsemotor 116, der Referenzspannung, der ersten Schwellenspannung und der zweiten Schwellenspannung entspricht. Die von der Steuerschaltung 94 je verarbeiteten Werte geben somit nicht lediglich den aktuellen Spannungswert des Akkusatzes 68 wieder, sondern erlauben es der Steuerschaltung 94, die Entladekurve des Akkusatzes zu ermitteln. Wenn auch der aktuelle Stromwert über den Stromfühlwiderstand 106 und den Differenzverstärker 108 und der aktuelle Spannungswert über den Differenzverstärker 104 gemessen werden kann, ist es ebenfalls möglich, den Stromfühlwiderstand 106 durch einen Kurzschluß zu ersetzen, und lediglich unter Verwendung der Schaltung mit den Differenzverstärkern 120 bis 124 die Spannungs- und Stromwerte des Akkusatzes 68 und ggf. deren Entwicklung zu ermitteln und auf den Ladezustand des Akkusatzes 68 einerseits, dessen Alterung andererseits und die sich hieraus ergebende zur Verfügung stehende Betriebsdauer zu schließen.

Die Steuerschaltung 94 umfaßt hierzu einen Offset, mit welchem die bei einer Fotopolymerisation längstmöglich auftretende Brenndauer von der tatsächlichen Restbetriebsdauer subtrahiert wird. Die somit anzuzeigende Restbetriebsdauer wird in der Kapazitätsanzeige 84 eingeblendet und erscheint dort in Form eines Balkendiagramms sowie bevorzugt zusätzlich in digitaler Form, wobei die Anzeige in 0.5 min. Schritten erfolgt.

Die Steuerschaltung 94 ist so aufgebaut, daß die Lampenspannung der Lampe 70 allmählich innerhalb von 1 bis 2 Sekunden aufgebaut wird. Hierdurch wird ein zu starker Stromimpuls aufgrund des geringen Kaltwiderstands der Lampe 70 vermieden, und die Lebensdauer der Lampe erhöht. Während die Lampe brennt, wird im Zeitintervall von 20 Sekunden für 1 bis 1,5 Sekunden über den Lautsprecher 112 ein Signalton abgegeben, wobei bevorzugt nach 20 Sekunden ein einfacher Signalton, nach 40 Sekunden ein zweifacher und nach 60 Sekunden ein dreifacher Signalton sowie bei noch längere Belichtung ein ebenfalls dreifacher Signalton abgegeben wird.

Es versteht sich, daß verschiedene Änderungen je nach gewünschter Anwendung sinnvoll sein können. Beispielsweise kann der Stromfühlwiderstand 106 dem Leistungstransistor 114 nachgeschaltet sein, um den Lampenstrom durch die Lampe 70 exakter zu messen. Auch kann der Leistungstransistor 114 als PNP-Typ ausgebildet, was in vielen Fällen günstiger ist. Ferner kann anstelle der dargestellten kontinuierlichen Betriebsart sowohl die Steuerschaltung 54 als auch die Steuerschaltung 94 so ausgelegt sein, daß ein getasteter Betrieb der jeweiligen Transistoren 58 bzw. 114 und 115 möglich wird, wobei durch Änderung des Pausenverhältnisses eine verlustleistungsarme Regelung möglich ist. In diesem Falle können die Leistungstransistoren auch durch Thyristoren ersetzt werden.

## Patentansprüche

1. Wiederaufladbares Lichthärtgerät, insbesondere für das Aushärten von Dentalwerkstoffen wie Zahnfüllmaterialien, mit einem Handgerät, das einen mindestens einen Akkumulator aufweisenden Akkusatz (68) und einen elektrischen Anschluß (86) für das Aufladen des Akkusatzes (68) aufweist, wobei ein durch den Bediener auslösbarer Schalter (80) eine Lampe (70) für die Erzeugung eines definierten Lichtabgabezustandes an im Bereich der Lampe (70) angeordneten Lichtleitelementen (74) einschaltet, dadurch gekennzeichnet, daß in den Strompfad zwischen Akkusatz (68) und Lampe (70) ein Kapazitätsmeßschaltkreis (82) geschaltet ist, der die je noch zur Verfügung stehende Restbetriebsdauer des Akkusatzes (68) kontinuierlich mißt, daß der Kapazitätsmeßschaltkreis (82) die Betriebsspannung im belasteten Zustand zu einem ersten und einem zweiten, späteren Zeitpunkt mißt und die Entladekarve des Akkusatzes (68) feststellt und auf die noch zur Verfügung stehende Restbetriebsdauer schließt und daß eine Steuerschaltung (94) den Betrieb des Lichthärtgeräts (12) sperrt, wenn die Restbetriebsdauer den Wert der im Betrieb maximal pro Brennzyklus erforderlichen Lampenbrenndauer unterschreitet.

2. Lichthärtgerät nach Anspruch 1, dadurch gekennzeichnet, daß für die Bestimmung der Restbetriebsdauer des Akkusatzes der definierte Lichtabgabezustand als Licht oberhalb einer vorgebenen Schwellenintensität abgebend festgelegt ist und die Steuerschaltung (94) den Betrieb des Lichthärtgeräts (12) sperrt, wenn die einer Minimumkapazität entsprechende Restbetriebsdauer erschöpft ist.

3. Lichthärtgerät nach einem der vorhergehenden Ansprüche, dadurch gekennzeichnet, daß ein Kompensationsschaltkreis vorgesehen ist, mit welchem zur dynamischen Anpassung an die Alterung des Akkusatzes (68) die Restbetriebdauer verkürzt wird.

4. Lichthärtgerät nach einem der vorhergehenden Ansprüche, dadurch gekennzeichnet, daß der Schalter (80) eine Tastfunktion aufweist, die einen Steuerimpuls für die Steuerschaltung (94) des Lichthärtgeräts (12) abgibt, wobei die Steuerimpulse die Lampe (70) abwechselnd ein- und ausschalten.

5. Lichthärtgerät nach einem der vorhergehenden Ansprüche, dadurch gekennzeichnet, daß im Einschalt-Betriebszustand der Lampe (70) ein akustisches Signal abgebbar ist, das insbesondere in einem Zeitintervall vom 5 bis 30 Sekunden, vorzugsweise in einem Zeitintervall von etwa 20 Sekunden, das Verstreichen der entsprechenden Belichtungszeit signalisiert, wobei bevorzugt nach mehrfachem Verstreichen des Zeitintervalls das akustische Signal je entsprechend mehrfach abgebbar ist.

6. Lichthärtgerät nach einem der vorhergehenden Ansprüche, dadurch gekennzeichnet, daß das Einschalten der Lampe (70) durch den Schalter (80) die Lampenspannung allmählich, insbesondere innerhalb eines Startintervalls von 0,5 bis 3, vorzugsweise 1 bis 2 Sekunden aufbaut.

7. Lichthärtgerät nach einem der vorhergehenden Ansprüche, dadurch gekennzeichnet, daß das Einschalten der Lampe (70) zugleich einen Kühlventilator für diese einschaltet, deren Nachlauf über einen Temperatursensor (110) steuerbar ist.

8. Lichthärtgerät nach einem der vorhergehenden Ansprüche, dadurch gekennzeichnet, daß ein Akkusatz-Temperatursensor (92) oder der Temperatursensor (110) gemäß Anspruch 7 eine Sicherheitsabschaltung der Lampe (70) steuert, wenn die gemessene Temperatur eine vorgebene Grenztemperatur überschreitet.

9. Lichthärtgerät nach einem der Ansprüche 1 - 7, dadurch gekennzeichnet, daß ein Akkusatz-Temperatursensor (92) thermisch mit dem Akkusatz (68) gekoppelt ist und das Lichthärtgerät (12) abschaltet, wenn die Akkumulatoren - gegebenenfalls aufgrund eines technischen Defekts oder einer Dauerentladung - eine vorgegebene Grenztemperatur von beispielsweise 60 °C überschreiten.

10. Lichthärtgerät nach einem der vorhergehenden Ansprüche, dadurch gekennzeichnet, daß der Kapazitätsmeßschaltkreis (82) an eine Kapazitätsanzeige (84) angeschlossen ist, mit welcher die zur Verfügung stehende Restbetriebsdauer anzeigbar ist.

11. Lichthärtgerät nach Anspruch 10, dadurch gekennzeichnet, daß eine Kapazitätsanzeige (84), die von dem Kapazitätsmeßschaltkreis (82) angesteuert ist, bei schneller abfallendem Entladestrom eine Alterung des Akkusatzes (68) anzeigt.

12. Lichthärtgerät nach einem der vorhergehenden Ansprüche, dadurch gekennzeichnet, daß ein Schaltkreis zur Kompensation des Memory-Effektes vorgesehen ist, der insbesondere ein Schnellentladen des Akkusatzes (68) ermöglicht.

## Claims

1. A rechargeable light curing apparatus, in particular for curing dental materials such as tooth filling materials, comprising a hand-operated device which has at least one storage battery pack (68) having at least one battery and an electrical connection (96) for charging the battery pack (68), wherein a switch (80), which can be actuated by the operator, switches on a lamp (70) so as to generate a defined light-emission condition to be coneyed by light guide elements (74) arranged in the vicinity of the lamp (70), characterised in that a capacity-measuring circuit (82) is connected into the current path between the battery pack (68) and the lamp (70), which circuit (82) continuously measures the available operating time still remaining in the battery pack (68), in that the capacity-measuring circuit (82) measures the operating voltage in the loaded condition at a first time interval and at a second, subsequent, time interval and determines the discharge curve of the battery pack (68), and indicates the available operating time still remaining, and in that a control circuit (94) shuts off the operation of the light curing apparatus (12) when the remaining operating time falls below a value representative of the maximum lamp operating time required per operating cycle.

2. A light curing apparatus according to Claim 1, characterised in that to determine the operating time remaining in the battery pack the defined light emission condition is determined emissively as light above a preset threshold intensity, and the control circuit (94) shuts off operation of the light curing apparatus (12) when the operating time remaining, corresponding to a minimum capacity, is exhausted.

3. A light curing apparatus according to any one of the preceding Claims, characterised in that a compensating circuit is provided, with which for dynamic adaptation to the ageing of the battery pack (68) the remaining operating time is shortened.

4. A light curing apparatus according to any one of the preceding Claims, characterised in that the switch (80) has a key function which emits a control impulse for the control circuit (94) of the light curing apparatus (12), wherein the control impulse alternately switches the lamp (70) on and off.

5. A light curing apparatus according to any one of the preceding Claims, characterised in that, during the switched-on operating condition of the lamp (70), an acoustic signal can be emitted which signals the elapse of the corresponding lighting time, particularly within a time interval of 5 to 20 seconds, preferably a time interval of approximately 20 seconds, wherein preferably after a multiple time interval has elapsed the acoustic signal can be correspondingly emitted a number of times.

6. A light curing apparatus according to any one of the preceding Claims, characterised in that the switching-on of the lamp (70) by the switch (80) gradually increases the lamp voltage, in particular within a starting interval of 0.5 to 3 seconds, preferably of 1 to 2 seconds.

7. A light curing apparatus according to any one of the preceding Claims, characterised in that the switching-on of the lamp (70) simultaneously switches on a cooling fan therefor, the continued running of which can be controlled via a temperature sensor (110).

8. A light curing apparatus according to any one of the preceding Claims, characterised in that a battery-pack temperature sensor (92) or the temperature sensor (110) according to Claim 7, controls an emergency shut-down of the lamp (70) when the measured temperature exceeds a preset limit temperature.

9. A light curing apparatus according to any one of Claims 1 to 7, characterised in that a battery-pack temperature sensor (92) is coupled thermally with the battery pack (68) and switches off the light curing apparatus (12) when the batteries, optionally as a result of a technical fault or a continuous discharge, exceed a preset limit temperature of, for example, 60°C.

10. A light curing apparatus according to any one of the preceding Claims, characterised in that the capacity-measuring circuit (82) is connected to a capacity display (84) which enables the available operating time remaining to be displayed.

11. A light curing apparatus according to Claim 10, characterised in that a capacity display (84), which is controlled by a capacity-measuring circuit (82), displays any ageing of the battery pack (68) occurring when there is a more rapidly decreasing discharge current.

12. A light curing apparatus according to any one of the preceding Claims, characterised in that a circuit is provided to compensate for the memory effect, which in particular makes possible rapid discharge of the battery pack (68).

## Revendications

1. Appareil rechargeable de durcissement à la lumière, destiné notamment au durcissement de matières dentaires telles que des matières de remplissage de dents, avec un appareil à main comportant un jeu d'accumulateurs (68) avec au moins un accumulateur, et un raccordement électrique (86) pour la recharge du jeu d'accumulateurs (68), un commutateur (80) pouvant être déclenché par l'opérateur qui allume une lampe (70) pour générer un état défini d'émission lumineuse au niveau d'éléments de guides d'ondes lumineuses (74) disposés dans la zone de la lampe (70), caractérisé en ce qu'un circuit (82) de mesure de capacité est branché dans la voie de courant entre le jeu d'accumulateurs (68) et la lampe (70), lequel mesure en continu la durée de fonctionnement restante encore disponible du jeu d'accumulateurs (68), en ce que le circuit (82) de mesure de capacité mesure la tension de service à l'état de charge à un premier moment, et à un deuxième moment ultérieur, et détecte la courbe de décharge du jeu d'accumulateurs (68), et qu'il en déduit la durée de fonctionnement restante encore disponible, et en ce qu'un circuit (94) de commande coupe le fonctionnement de l'appareil (12) de durcissement à la lumière lorsque la durée de fonctionnement restante est inférieure à la valeur maximale nécessaire à la durée d'éclairage de la lampe par cycle d'éclairage.

2. Appareil de durcissement à la lumière selon la revendication 1, caractérisé en ce que, pour déterminer la durée de fonctionnement restante du jeu d'accumulateurs, l'état défini d'émission lumineuse est défini en tant que lumière émettant au-delà d'une intensité de seuil prescrite, et en ce que le circuit (94) de commande coupe le fonctionnement de l'appareil (12) de durcissement à la lumière lorsque la durée de fonctionnement restante correspondant à une capacité minimale est écoulée.

3. Appareil de durcissement à la lumière selon l'une des revendications précédentes, caractérisé en ce qu'il est prévu un circuit de compensation, avec lequel la durée de fonctionnement restante est raccourcie pour assurer une adaptation dynamique au vieillissement du jeu d'accumulateurs (68)

4. Appareil de durcissement à la lumière selon l'une quelconque des revendications précédentes, caractérisé en ce que le commutateur (80) comporte une fonction à touche qui délivre une impulsion de commande pour le circuit (94) de commande de l'appareil (12) de durcissement à la lumière, les impulsions de commande allumant et éteignant alternativement la lampe (70).

5. Appareil de durcissement à la lumière selon l'une quelconque des revendications précédentes, caractérisé en ce qu'un signal acoustique peut être émis à l'état de marche de la lampe (70), qui signale l'écoulement du temps d'éclairage correspondant, notamment dans un intervalle de temps de 5 à 30 secondes, de préférence dans un intervalle de temps de l'ordre de 20 secondes, le signal acoustique pouvant être émis de préférence à plusieurs reprises après l'écoulement réitéré de l'intervalle de temps.

6. Appareil de durcissement à la lumière selon l'une quelconque des revendications précédentes, caractérisé en ce que l'allumage de la lampe (70) au moyen du commutateur (80) applique progressivement la tension à la lampe, notamment en l'espace d'un intervalle de mise en marche de 0,5 à 3 secondes, de préférence de 1 à 2 secondes.

7. Appareil de durcissement à la lumière selon l'une quelconque des revendications précédentes, caractérisé en ce que l'allumage de la lampe (70) enclenche simultanément un ventilateur de refroidissement pour cette dernière, dont la poursuite peut être commandée par l'intermédiaire d'un détecteur de température (110).

8. Appareil de durcissement à la lumière selon l'une quelconque des revendications précédentes, caractérisé en ce qu'un détecteur de température (92) du jeu d'accumulateurs ou le détecteur de température (110) selon la revendication 7, commande un circuit de sécurité de la lampe (70) lorsque la température mesurée dépasse une température limite prescrite.

9. Appareil de durcissement à la lumière selon l'une quelconque des revendications 1 à 7, caractérisé en ce qu'un détecteur de température (92) du jeu d'accumulateurs est couplé thermiquement avec le jeu d'accumulateurs (68) et coupe l'appareil (12) de durcissement à la lumière lorsque - le cas échéant en raison d'un défaut technique ou d'une décharge permanente - les accumulateurs dépassent une température limite prescrite, de 60 °C par exemple.

10. Appareil de durcissement à la lumière selon l'une quelconque des revendications précédentes, caractérisé en ce que le circuit (82) de mesure de capacité est raccordé à un affichage (84) de capacité, au moyen duquel la durée de fonctionnement restante disponible peut être affichée.

11. Appareil de durcissement à la lumière selon la revendication 10, caractérisé en ce qu'un affichage (84) de capacité, qui est commandé par le circuit (82) de mesure de capacité, affiche un vieillissement du jeu d'accumulateurs (68) lorsque le courant de décharge chute plus rapidement.

12. Appareil de durcissement à la lumière selon l'une quelconque des revendications précédentes, caractérisé en ce qu'il est prévu un circuit destiné à la compensation de l'effet mémoire, qui permet notamment une décharge rapide du jeu d'accumulateurs (68).
